# EUROPEAN PATENT APPLICATION

(11) **EP 1 233 598 A1**
(43) Date of publication of application: **21.08.2002**
(21) Application number: 01103987.2
(22) Date of filing: 19.02.2001
(51) Int. Cl.: H04M 1/06, H04M 1/04, H04M 1/60, B60R 11/02

(54) **Holding device for a mobile telecommunication means**

(71) Applicant: Sony International (Europe) GmbH, 10785 Berlin (DE)
(72) Inventor: Mollinari, Maurizio, Digital Telecommunications, 85609 Aschheim (DE)
(74) Representative: Körber, Martin, Dipl.-Phys.

(57) **Abstract**

The present invention relates to a holding device for a mobile telecommunication means (10) for a wireless telecommunication system comprising a movable protecting means (5) for mechanical protecting the electrical contact (3) of the holding device (1), whereby the movable protecting means (5) comprises an aperture for the electrical contacts of the holding device. After inserting the mobile telecommunication means (10) into the holding device (1), the mobile telecommunication means (10) is pressed into a locked position, so that the electrical contact (3) is exposed by moving the protecting means (5). Thus, the electrical contact (3) of the holding device (1) is connected to the electrical contact (3) of the mobile telecommunication means (10).

## Description

The present invention relates to a holding device for receiving a mobile telecommunication means for a wireless communication system, like a mobile telephone in GSM (Global System for Mobile Telecommunication) or UMTS (Universal Mobile Telephone System). Holding devices for mobile telecommunication means are e.g. used in cars as so called car cradles. Car cradles in combination with so called hands-free units allow a driver of a car to use his or her mobile telephone during driving his or her car without holding the mobile telephone at his head. For using holding devices as such hands-free units it is necessary to establish electrical connections between the mobile telephone and the holding device, like connections for an external antenna, battery charger, loudspeaker, microphone, etc.

In the prior art, a system connector is located at the bottom side of the mobile telephone, comprising all necessary connections for operating the mobile telephone hands-free. By inserting the mobile telephone, this system connector is connected to a suitable connector of the holding device to establish the necessary connections.

The disadvantage of this solution is, that such system connectors, particularly the system connectors of the holding device, are susceptible to damaging, since they are not sufficiently protected against mechanical influence.

To solve this problem, the international patent application WO 96/16499, Nokia Mobile Phones Ltd., describes a cradle for mobile telephones, which protects the system connector mechanically from damaging by using a slideable carriage, which only exposes the system connector when the mobile telephone is inserted into the cradle.

However, the disadvantage of this solution is, that due to the construction of the cradle, the connector is very susceptible to dirt, since the connector is located at the bottom side of the mobile telephone and therefore at the bottom side of the cradle. So, the dirt is pulled up in the cradle, which is formed like a trough.

A further disadvantage of this solution is, that this cradle allows more than one mechanical degree of freedom by inserting and removing the mobile telephone in and from the cradle. Optimally, the mobile telephone is inserted and removed in a direction, which is lengthwise in direction of the electrical contacts. However, this solution allows also a movement transverse to the electrical contacts during inserting and removing the mobile telephone, which could lead to damaging of the electrical contacts of the cradle.

This solution is further costly and expensive to realize, since it needs a lot of costly parts.

It is therefore the object of the present invention to provide a holding device for receiving a mobile telecommunication means for a wireless communication system, in which the electrical contacts are protected from dirt and mechanical influence, which could both lead to damage on the electrical contacts.

The above object is achieved by a holding device for receiving a mobile telecommunication means for a wireless telecommunication system according to claim 1.

A holding device for a mobile communication means is normally mounted vertically or disposed on a surface (e.g. on the fascia of a car), so that the display of the mobile telephone is usually directed towards a user of the telephone. So, it is noted that particulars related to a direction, e.g. upper part, lower part, etc. relates to a direction of the holding device, in which such a holding device is normally mounted.

The holding device according to the present invention comprises a first positioning means for positioning a lower part of the mobile telecommunication means at a lower part of the holding device, at least one electrical contact in an upper part of the holding device for establishing an electrical connection to a corresponding electrical contact of the mobile telecommunication means, and a second positioning means for positioning an upper part of a mobile telecommunication means at an upper part of the holding device.

Further, the holding device according to the present invention comprises a movable protecting means for mechanical protecting the electrical contact of the holding device, whereby the movable protecting means comprises an aperture for the electrical contacts of the holding device. After inserting the mobile telecommunication means into the holding device, the mobile telecommunication means is pressed into a locked position, so that the electrical contact is exposed by moving the protecting means. Thus, the electrical contact of the holding device is connected to the electrical contact of the mobile telecommunication means.

The mobile telecommunication means is fastened in the locked position by a fastening means.

The advantage of the present invention is, that the mobile telecommunication means can only be inserted and removed in a direction along to and from the electrical contact. Thus, the at least one electrical contact is protected from damaging by inserting and removing the mobile telecommunication device, additionally to a protection when the mobile communication means is removed.

A further advantage of the present invention is, that the electrical contact is protected form dirt, since there is no trough where dirt could accumulate. The protecting means according to the present invention is also easy and inexpensive to implement in a holding device like a car cradle.

Advantageously, the first positioning means comprises at least one vertical pin for positioning the mobile telecommunication means at the lower end of the holding device when inserted. Thus, the mobile telecommunication means is positioned at the lower end downwards, sidewards and in direction of the holding device. When the mobile telecommunication means is inserted, it is first inserted into the first positioning means by a user.

After inserting the mobile telecommunication means into the first positioning means, the mobile telecommunication means is pressed into the locked position by the user. Thereby, the mobile telecommunication means is led sidewise by the second positioning means; the sidewise leading begins before the electrical contact is closed.

Advantageously, the second positioning means comprises two sidewalls for sidewise leading the mobile telecommunication means, which could be part of the holding device or part of the protecting means.

The holding device further comprises a spring, which is both associated with the protecting means and the holding device. The spring is depressed by moving the protection means caused by pressing the mobile telecommunication means into the locked position by a user. The spring removes the protection means by uncasing (removing) the mobile telecommunication means from the holding device, so that the electrical contact is mechanically protected.

Advantageously, the protecting means comprises a third positioning means, which corresponds to a positioning means of the mobile telecommunication means for leading the mobile telecommunication means, particularly the electrical contact of the mobile telecommunication means, into a correct position. The third positioning means is e.g. designed as a ring around the aperture of the protecting means.

Further advantageously, the at least one electrical contact is an RF-contact (radio frequency) to establish an electrical connection between the RF-contact of the mobile telecommunication means (RF-switch) and the RF-contact of the holding device (RF-probe) for connecting the antenna of the mobile telecommunication means with an external antenna, which is mounted e.g. at the outside of the car.

The fastening means is located in an upper part of the holding means, so that it fastens e.g. the top side of the inserted mobile telecommunication means. The fastening means is adapted to snap the mobile telecommunication means in the locking position and positions the upper part of the mobile telecommunication means upwards and in direction of the holding device.

To remove the mobile telecommunication means from the holding device, an eject button can provided. By pressing the eject button the fastening means disengages the mobile telecommunication means from the holding device.

After pressing the eject button and disengaging the mobile telecommunication means respectively, the mobile telecommunication means is ejected automatically from the holding device by the protecting means.

The holding device is fixed e.g. on the fascia of a car by a fixing means.

In the following description, a preferred embodiment of the present invention is explained in more detail in relation to the enclosed drawings in which
Fig. 1 shows a schematic overview of the holding device according to the present invention,
Fig. 1a shows a profile of the protecting means,
Fig. 2 shows an example of a holding device according to the present invention, and
Fig. 3 shows an exploded view of the holding device according to the present invention.

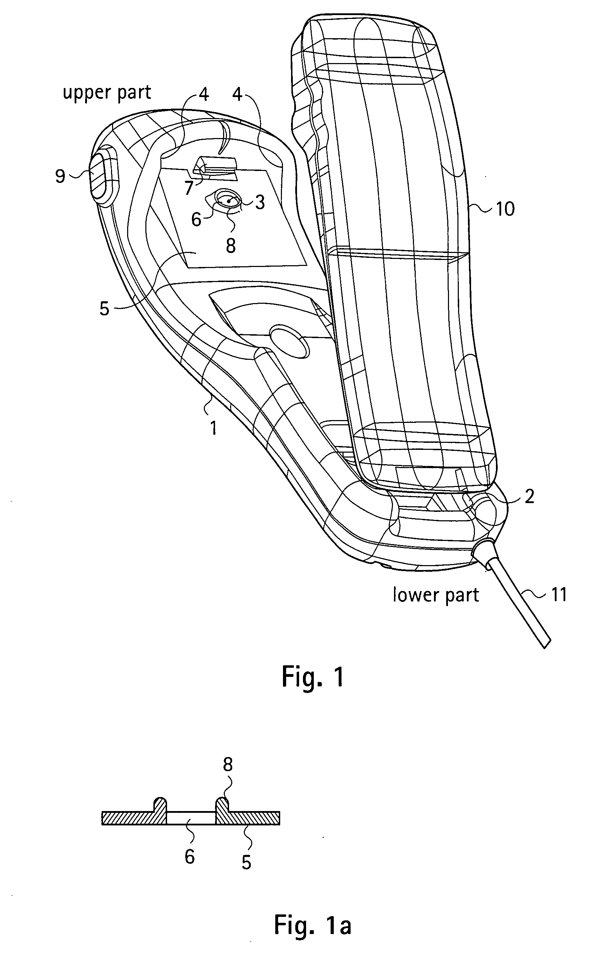

Fig. 1 shows a schematic overview of a holding device 1 according to the present invention receiving a mobile telecommunication means 10 (further called mobile telephone 10). Thereby, the mobile telephone 10 is partially inserted into the holding device 1, so that the mobile telephone 10 is positioned with its bottom side in the first positioning means 2 of the holding device 1.

The holding device 1 further comprises an electrical contact 3 and a second positioning means 4 which is in Fig. 1 part of the holding device 1 and the protecting means 5 according to the present invention.

The protecting means 5 comprises an aperture for exposing the electrical contact 3 when the mobile telephone 10 is in the locked position. The locked position is the position, wherein the mobile telephone 10 is permanently held (locked) by the holding device 1 until the mobile telephone 10 is ejected by a user.

Optional, the protecting means 5 comprises a third positioning means 8 for further positioning the mobile telephone 10, particularly the electrical contact, into a correct position. The third positioning means is e.g. designed as an emphasized ring, which is located around the aperture 6 of the protecting means 5. The third positioning means 8 leads a corresponding positioning means of the mobile telephone 10 in order to lead the aperture 6 of the protecting means into a correct position. A profile of the protecting means comprising the third positioning means 10 is shown in Fig. 1a.

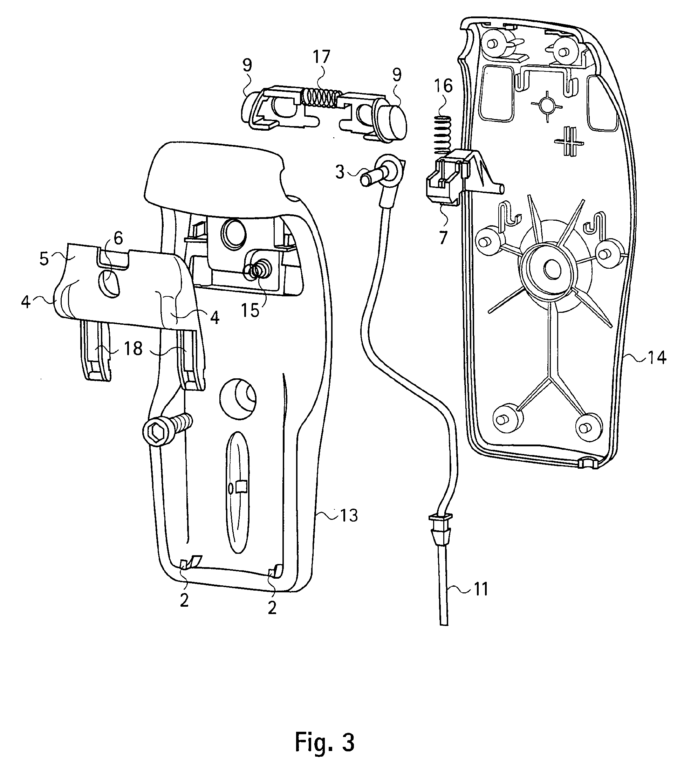

The mobile telephone 10 is held in the locked position by the fastening means 7. The fastening means 7 operates like a hook which snaps into a suitable aperture of the mobile telephone 10 in the locked position. Therefore, the fastening means 7 is pivoted, so that the hook allows to insert the mobile telephone 10 into the holding device 1. After inserting and pressing the mobile telephone 10 into the holding device 1, the hook snaps into a suitable aperture or notch of the mobile telephone 10 by means of a spring (third spring 16, shown in Fig. 3) or by means of an other elastic means, like an elastic plastic; the mobile telephone 10 is then locked in the locked position.

To remove the mobile telephone 10 from the holding device 1, a user operates the eject button 9. By operating the eject button 9, the fastening means 7 is retrieved from the aperture of the mobile telephone 10, whereafter the mobile telephone 10 is disengaged. Thereupon, the mobile telephone 10 is automatically ejected by the protecting means 5 by means of a spring (first spring 15, shown in Fig. 3).

For connecting an antenna of the mobile telephone by means of the electrical contact 3 (a RF-contact in the example), the holding device 1 further comprises a cable 11 to an external antenna, which is e.g. mounted at the outside of the car.

If the holding device 1 and the electrical contact 3 respectively supports only the connecting of an external antenna, e.g. the function of the loudspeaker and the microphone for supporting the hands-free function has to be fulfilled by the mobile telephone 10. Therefore, e.g. the sensibility of the microphone and the loudness of the loudspeaker can be raised automatically by the mobile telephone 10 after inserting into the holding device 1.

The problem to realize the hands-free function can also be solved by a further connector provided by the mobile telephone 10 (e.g. at the side of the mobile telephone 10). This connector allows to connect e.g. a headset, external microphone, external loudspeaker, battery charger, etc. to the mobile telephone 10.

Fig. 1a shows a profile of the protecting means 5, comprising the aperture 6 and the third positioning means 8. The third positioning means 8 is thereby designed as an emphasized ring around the aperture 6, which corresponds to a suitable positioning means of the mobile telephone 10.

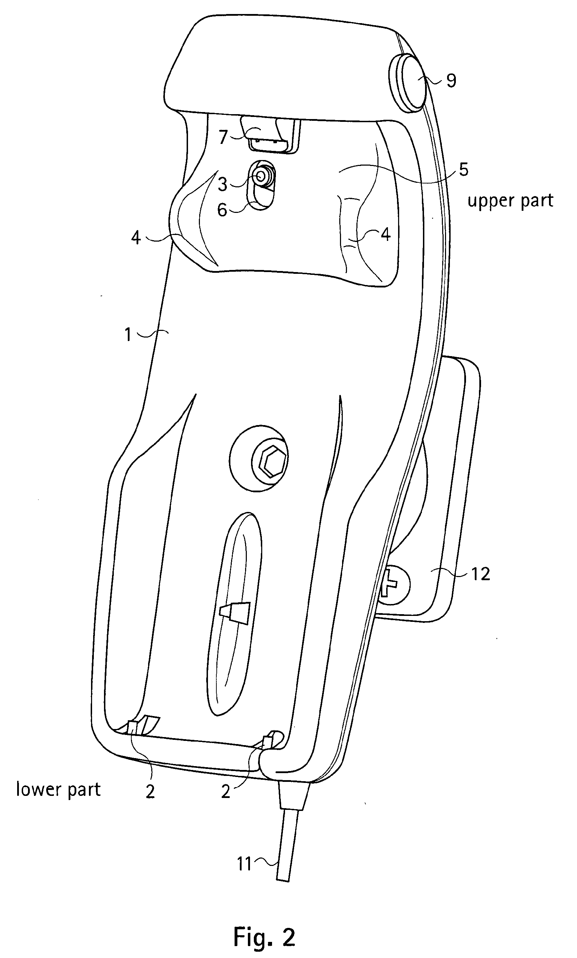

Fig. 2 shows an example of a model of a holding device 1 according to the present invention; the numbering of Fig. 1 is maintained.

In this embodiment, the first positioning means 2 consists of two vertical positioning pins, which are fitted at a lower front (inside) the holding device 1.

When a mobile telephone is inserted into the holding device 1 by a user, it is first inserted with its lower part, which is suitable to the first positioning means 2, into the first positioning means 2. The mobile telephone is by means of the first positioning means 1 fixed with its lower part from moving downwards, sidewards and towards of the holding device 1.

Thereafter, the mobile telephone is pressed with its upper part into the locked position by the user. Thereby, during pressing into the locked position, the mobile telephone is positioned sidewise by the second positioning means 4, which are in this example parts of the protecting means 5. During pressing, the movable protection means 5 moves backwards to expose the electrical contact 3, which is an RF-probe in this example, by means of the aperture 6. Simultaneously, a spring (first spring 15, shown in Fig. 3), which is both associated with the holding device 1 and the protecting means 5, is depressed.

For holding the mobile telephone in the locking position, the fastening means 7, which is formed like a hook, snaps into a suitable notch of the mobile telephone, which is located at the upper front of the mobile telephone.

The mobile telephone is ejected by pressing the eject button 9. Thereby, the fastening means 7 disengages the mobile telephone, whereupon the mobile telephone is ejected by the protecting means 5 by means of the spring. After removing the mobile telephone, the protecting means 5 protects once again mechanically the electrical contact 3 from damaging and dirting.

Fig. 3 shows an exploded view of the holding device 1 according to Fig. 2.

The casing of the holding device 1 comprises a front part 13 and a back part 14. In this casing the means of the holding device 1 according to the present invention are mounted. Fig. 3 shows further the spring 15 (first spring 15) which is both associated with the protecting means 5 and the holding device 1.

Further, a second spring 16 is both associated with the fastening means 7 and the holding device 1 to hold the mobile telephone in the locked position and which is depressed when the eject button is pressed, and which removes the fastening means 7 after unhanding the eject button 9.

Also further, a third spring 17 is associated between the two eject buttons 9, which removes the eject buttons 9 after pressing.

The protecting means 5 further comprises a bearing means 18. The protecting means is pivoted by means of the bearing means 18 at the holding device 1.

## Claims

1. Holding device (1) for receiving a mobile telecommunication means (10) for a wireless telecommunication system, comprising
first positioning means (2) for positioning a lower part of the mobile telecommunication means (10) at a lower part of the holding device (1),
an electrical contact (3) in an upper part of the holding device (1) for establishing an electrical connection to an corresponding electrical contact of the mobile telecommunication means (10),
second positioning means (4) for positioning an upper part of the mobile telecommunication means (10) at an upper part of the holding device (1),
movable protecting means (5) for mechanically protecting the electrical contact (3) of the holding device (1), comprising an aperture (6) for the electrical contact (3) of the holding device (1), whereby by inserting the mobile telecommunication means (10) into the holding device (1) and pressing the mobile telecommunication means (10) into a locked position, the protecting means (5) is moved so that the electrical contact (3) of the holding device (1) is exposed and connected to the electrical contact of the mobile telecommunication means (10), and
a fastening means (7) for fastening the mobile telecommunication means (10) in the locked position.

2. Holding device (1) according to claim 1,
**characterized in,**
**that** the first positioning means (2) comprises at least one vertical positioning pin for positioning the mobile telecommunication means (10) at the lower end of the holding device (1).

3. Holding device (1) according to claim 1 or 2,
**characterized in,**
**that** the second positioning means (4) positions the mobile telecommunication means (10) sidewise during pressing into the locked position and before closing the contact.

4. Holding device (1) according to claim 3,
**characterized in,**
**that** the second positioning means (4) comprises two sidewalls for sidewise leading the mobile telecommunication means (10).

5. Holding device (1) according to one of the claims 1 to 4,
**characterized in,**
**that** the second positioning means (4) is a part of the protecting means (5).

6. Holding device (1) according to one of the claims 1 to 5,
**characterized by**
a spring both associated with the protecting means (5) and the holding device (1), so that the spring is depressed by moving the protection means (5) caused by the insertion of the mobile telecommunication means (1) and the spring removes the protection means (5) by removing the mobile telecommunication means (10) from the holding device (1).

7. Holding device (1) according to one of the claims 1 to 6,
**characterized in,**
**that** the protecting means (5) comprises a third positioning means (8) which corresponds to a positioning means of the mobile telecommunication means (10) for leading the electrical contact of the mobile telecommunication means into a correct position.

8. Holding device (1) according to one of the claims 1 to 7,
**characterized in,**
**that** the electrical contact (3) is a RF-contact.

9. Holding device (1) according to one of the claims 1 to 8,
**characterized in,**
**that** the fastening means (7) is located in an upper part of the holding device (1), whereby the fastening means (7) is adapted to snap the mobile telecommunication means (10) into the locked position.

10. Holding device (1) according to one of the claims 1 to 9,
**characterized by**
an eject button for causing the fastening means (7) to disengage the mobile telecommunication means (10).

11. Holding device (1) according to claim 10,
**characterized in,**
**that** after disengaging the mobile telecommunication means (10) is ejected automatically from the holding device (1) by the protecting means (5).

12. Holding device (1) according to one of the claims 1 to 11,
**characterized by**
a fixing means for fixing the holding device
